(19) Europäisches Patentamt / European Patent Office / Office européen des brevets

(11) **EP 3 293 700 B1**

(12) **EUROPEAN PATENT SPECIFICATION**

(45) Date of publication and mention
of the grant of the patent:
**13.11.2019 Bulletin 2019/46**

(51) Int Cl.:
**G06T 7/55** *(2017.01)*          **G06T 7/579** *(2017.01)*

(21) Application number: **16188128.9**

(22) Date of filing: **09.09.2016**

(54) **3D RECONSTRUCTION FOR VEHICLE**

3D-REKONSTRUKTION FÜR EIN FAHRZEUG

RECONSTRUCTION 3D POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.03.2018 Bulletin 2018/11**

(73) Proprietor: **Panasonic Automotive & Industrial Systems Europe GmbH**
**63225 Langen (DE)**

(72) Inventor: **NGUYEN, Duong-Van**
**63225 Langen (DE)**

(74) Representative: **Grünecker Patent- und Rechtsanwälte**
**PartG mbB**
**Leopoldstraße 4**
**80802 München (DE)**

(56) References cited:
• FITZGIBBON A W ET AL: "Automatic camera recovery for closed or open image sequences", [Online] 1 January 1998 (1998-01-01), ECCV,, PAGE(S) 311 - 326, XP002510308, Retrieved from the Internet: URL:http://citeseerx.ist.psu.edu/viewdoc/d ownload> [retrieved on 2009-01-14] * the whole document *
• David Nistér: "Reconstruction from Uncalibrated Sequences with a Hierarchy of Trifocal Tensors" In: "Network and Parallel Computing", 1 January 2000 (2000-01-01), Springer International Publishing, Cham 032548, XP055339917, ISSN: 0302-9743 ISBN: 978-3-642-27653-8 vol. 1842, pages 649-663, DOI: 10.1007/3-540-45054-8_42, * the whole document *
• HEUNG-YEUNG SHUM ET AL: "Efficient Bundle Adjustment with Virtual Key Frames: A Hierarchical Approach to Multi-frame Structure from Motion", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 2, 23 June 1999 (1999-06-23), pages 538-543, XP010347536, ISBN: 978-0-7695-0149-9
• SIMON GIBSON ET AL: "Accurate Camera Calibration for Off-line, Video-Based Augmented Reality", PROCEEDINGS / INTERNATIONAL SYMPOSIUM ON MIXED AND AUGMENTED RALITY : ISMAR 2002 ; SEPTEMBER 30 - OCTOBER 1,2002, DARMSTADT, GERMANY, IEEEE COMPUTER SOCIETY, LOS ALAMITOS, CALIF. [U.A.], 30 September 2002 (2002-09-30), page 37, XP058274973, ISBN: 978-0-7695-1781-0

**Description**

**FIELD OF THE INVENTION**

The present invention generally relates to the field of automatic driver assistance systems. More specifically, the present invention relates to a method and system for performing a 3D reconstruction of the surroundings of a vehicle.

**BACKGROUND ART**

Recently, automatic driver assistance systems became of great interest in the automotive industry, for instance in connection with the development of automated parking and breaking assistants.

In order to interpret the surrounding environment in detail, it is essential to properly reconstruct the 3D world in real-time. Numerous different 3D reconstruction techniques using active sensors, including time of flight sensors (LIDAR, Laser Scanner, Ultrasonic Sensor, Radar etc.), have been developed to capture the 3D structure of a part of the environment, such as for autonomous navigation of vehicles, 3D object detection/recognition and 3D film production. However, these technologies have certain drawbacks. Good Laser Scanners, such as those developed and used in military applications, are too expensive and therefore not suitable for everyday civilian usage. Other active sensor technologies have some technical deficiency due to the nature of the signal used by them, which leads to the incapability of understanding the big picture of the surrounding environment.

An alternative that was recently brought into development is the usage of camera-based systems for 3D reconstruction, as an example of passive sensor based systems. Specifically, multiple images-based technologies, more specifically, stereo vision based systems came into use. Although it is a passive sensor, a camera is capable of capturing a lot of details and useful information to be interpreted. In view of the development of computer technology in the field of computer vision and camera technology in recent decades, camera-based systems for 3D reconstruction for automated driver assistance systems have become a promising option.

On the other hand, today most modern cars in the automotive market are equipped with 360° surrounding view systems. Hence, it would make sense to employ such available systems for 3D environment reconstruction. For instance, with four fisheye cameras mounted at the front, rear, and two sides of a car, the whole 3D environment can be captured and may be reconstructed so that it is feasible to detect obstacles around the car when it is moving.

So far, mostly stereo vision-based systems (including multiple images-based in case of using multiple cameras to capture the scene simultaneously) have been used for the intended purpose. However, such methods require the use of more than one camera with unknown positions and the world coordinate (certainly online calibration is possible). Additionally, they are computationally expensive and not feasible for real-time applications with wide opening angle of fish eye cameras, especially for use with current common vehicle embedded computing systems.

Another approach is based on the so-called "Structure from Motion" (SfM) framework, which is well known in the field of computer vision, and widely used in biomedical imaging, 3D film/game making, archaeology etc. The essence of this approach resides in that the offset (disparity) between the location of multiple cameras (two in case of stereo vision), also called "baseline", is replaced by the offset between different locations of one and the same camera, when consecutively capturing images during motion. In this connection, it is further noted that in modern vehicles odometry information, in particular wheel speed and steering angle information are detected and made available through the vehicle bus system, such as a CAN/FlexRay signal. This enables an estimation of the vehicle motion on the basis of data available in the vehicle. It has to be noted, however, that the precision with which camera locations that change in view of motion can be determined on the basis of vehicle odometry data is smaller and thus the location information is less reliable than for stereo based (multi camera-based) approaches, in view of uncertainties in the vehicle odometry data, as well as noise effects.

Moreover, current SfM techniques are usually for a pinhole camera model and further for off-line applications (since they require much computational effort with huge throughput). Hence, existing techniques employing the SfM approach are not suitable for real-time applications in vehicle embedded systems. For specific vehicle related applications such as automated parking and breaking, it is required that the system can process all necessary data fast enough, in order to build the 3D environment in real-time for 3D object detection as well as parking slot detection. Specifically, in existing approaches the epipolar geometry is applied for 3D point estimation. This is not always reliable since it requires the assumption of traversing on a completely flat road, which is usually not the case. For this purpose, global bundle adjustment is performed is a nonlinear method for refining both the reconstruction result and the motion data. This makes the 3D reconstruction very complex and needing much throughput. This becomes particularly manifest when taking into account that a dense structure of feature points is necessary for the SFM approach. Currently, this is so computationally expensive that it is not even feasible for a PC based on four cameras let alone for a vehicle embedded platform.

The following lists some exemplary articles describing approaches for reconstructing the 3D scene from a sequence of images known in the art.

The article "Automatic Camera Recovery for Closed or Open Image Sequences" by A.W. Fitzgibbon et al., Proc. ECCV 98, pages 311-326, 1998, URL: http://citeseerx.ist.psu.edu/viewdoc/download, describes a hierarchical approach of subsampling using a balanced tree of trifocal tensors over a video sequence.

The article "Reconstruction from Uncalibrated Sequences with a Hierarchy of Trifocal Tensors" by David Nistér, in "Network and Parallel Computing", vol. 1842, 2000, pages 649-663, provides a generalization of the approach by Fitzgibbon et al. aiming at selecting the blitz of views from which accurate and unique trifocal tensors can be calculated rather than simply three consecutive views in the video sequence.

The article "Efficient Bundle Adjustment with Virtual Key Frames: A Hierarchical Approach to Multi-frame Structure from Motion" by Heung-Yeung Shum et al., Proceedings of the 1999 IEEE Computer Society Conference on Computer Vision and Pattern Recognition, Fort Collins, Colorado, 1999, vol. 2, pages 538-543, describes to divide a long image sequence first into a number of segments so that feature points can be reliably tracked across each segment 3D. Reconstruction is then performed for each segment and efficient bundle adjustment is performed for the whole sequence.

The article "Accurate Camera Calibration for Off-line, Video-Based Augmented Reality" by Simon Gibson et al., Proceedings of the International Symposium on Mixed and Augmented Reality ISMAR'02, Darmstadt, 2002, IEEE Computer Society, describes a feature tracking algorithm based on the well-known Kanade-Lucas-Tomasi tracker, wherein sub- sequences are merged together to form a complete reconstruction according to a hierarchical scheme and estimates of inter-frame camera motion are used to guide tracking so as to reduce the number of incorrectly tracked features.

## SUMMARY OF THE INVENTION

The present invention aims to overcome the drawbacks of conventional 3D reconstruction technologies and to provide a method and system for performing a fast and robust 3D reconstruction of a vehicle environment, suitable for driving assistance systems or self-driving systems, with the available infrastructure of cars produced by the automotive industry.

This is achieved by the features of the independent claims.

According to a first aspect of the present invention, a method is provided of generating a 3D reconstruction model of a portion of the space surrounding a moving vehicle by means of a vehicle embedded computing system on the basis of image data obtained by a digital camera mounted on the vehicle and capable of imaging a portion of the space surrounding the vehicle and on vehicle odometry data indicating the movement of the vehicle. The method comprises the step of capturing, by the camera, a first plurality N, N > 2, of images of the portion of the space surrounding the vehicle, at a predetermined frame rate, while the vehicle is moving. The method further comprises the steps of selecting an image point to be tracked through the first plurality of images, tracking the image point through the first plurality of images so as to obtain a first plurality N of tracked image points and of generating a second plurality N' of subsets of tracked image points, each of the subsets including the-a third plurality of a predetermined number n of tracked image points corresponding to a third plurality of consecutive images, wherein N' < N and n < N. For each of the N' subsets, the method comprises performing the steps of reconstructing the 3D world coordinate of the tracked image point based on triangulation on the basis of the vehicle odometry data and of determining a geometric quality metric characterizing the quality of the reconstructed 3D world coordinates. Further, the method comprises the step of selecting the 3D world coordinates reconstructed by means of the subset which produces the optimal result based on the determined geometric quality metric as the final reconstructed 3D point.

According to a second aspect of the present invention, a system is provided for generating a 3D reconstruction model of a portion of the space surrounding a moving vehicle. The system comprises a digital camera mounted on the vehicle and capable of imaging a portion of the space surrounding the vehicle, for capturing a first plurality N, N > 2, of images of the portion of the space surrounding the vehicle, at a predetermined frame rate, while the vehicle is moving. The system further comprises an odometry module for generating vehicle odometry data indicating the movement of the vehicle. The system further comprises a vehicle embedded computing system. The vehicle embedded computing system is adapted to select an image point to be tracked through the first plurality of images, track the image point through the first plurality of images so as to obtain a first plurality N of tracked image points and to generate a second plurality N' of subsets of tracked image points, each of the subsets including a third plurality of a predetermined number n of tracked image points corresponding to a third plurality of consecutive images, wherein N' < N and n < N. For each of the N' subsets, the vehicle embedded computing system is adapted to reconstruct the 3D world coordinates of the tracked image point based on triangulation on the basis of the vehicle odometry data and to determine a geometric quality metric characterizing the quality of the reconstructed 3D world coordinates. Finally, the vehicle embedded computing system is adapted to select the 3D world coordinates reconstructed by means of the subset which produces the optimal result based on the determined geometric quality metric as the final reconstructed 3D point.

In accordance with a further particular aspect of the present invention, a vehicle comprising the system according to the second aspect of the present invention is provided.

It is the particular approach of the present invention to provide a 3D reconstruction of a portion of the space surrounding a vehicle on the basis of a series of images captured by a single camera and vehicle odometry data. For this purpose, a plurality of feature points is tracked on consecutive images captured by the camera while the vehicle is moving. The 3D world coordinates of the points corresponding to the tracked feature points are reconstructed by triangulation on the basis of subsets of tracked image points formed out of an overall set of tracked image points. The respective camera positions corresponding to the image points are obtained on the basis of the vehicle odometry data. The subsets used for the reconstruction are selected on the basis of an optimization procedure with respect to a suitable geometric quality metric such as a reprojection error (of a reprojection back to the camera image domain). The reprojection error is a well known quality metric in the field of computer vision. It is a geometric error corresponding to the image distance between a reprojected point and the original. The subsets of image points are also called bundles.

Preferably, the vehicle odometry data include data about the vehicle speed and steering angle of the vehicle. Based on known initialization data, the vehicle movement can be derived therefrom. Preferably, the vehicle odometry data are provided via a vehicle bus system, more preferably a CAN/FlexRay bus.

Preferably, the first plurality N is N>3 and the step of generating a second plurality of subsets includes the steps of dividing the first plurality N of tracked image points in a fourth plurality m of manners into intermediate subsets of tracked image points, such that each of the m division results being a set of subsets of tracked image points including subsets having a predetermined number $n_k$, k = 1, ... m of tracked image points corresponding to consecutive images, performing the triangulation for reconstructing the 3D world coordinates of the tracked image point for each of the intermediate subsets included in the m sets being the division results, determining a geometric quality metric characterizing the quality of the reconstructed 3D world coordinates for each of the triangulation results and for each of the N tracked image points, comparing the determined geometric quality metrics with a predetermined threshold, counting a tracked image point having a geometric quality metric smaller than the threshold to be an inlier and marking a tracked image point having a geometric quality metric larger than the threshold and the respective intermediate subset to be an outlier, and selecting a set of subsets having the largest number of inliers among the m sets of intermediate subsets, but excluding the outliers, as the second plurality N' of subsets.

Summarizing, in accordance with said embodiment, at first the number n of tracked image points per subset (i.e. the size of the subsets) is determined on the basis of a geometric quality metric characterizing the quality of the reconstructed 3D world coordinates (3D points) with reference to each of the tracked image points. For this purpose, a reconstruction of 3D points is performed based on intermediate subsets having different sizes and the geometric quality metric is determined for them. Specifically, on the basis of the geometric quality metric it is determined whether a tracked image point is an inlier or outlier, and those subsets (having a predetermined size) are selected for the processing, for which the overall number of inliers is the highest. Examples of a suitable geometric quality metric are a reprojection error or the squared distance of the reconstructed 3D point to the ray from the camera position to the tracked image point.

The background is that an optimal number of tracked image points per subset depends on various circumstances, such as the particular kind of optical flow process used for the tracking and the noise. Specifically, for a high noise level, a smaller size of the subsets is preferable, in order to have at least one subset being an inlier (i.e. containing n correct tracked image points).

For the triangulation, different methods are used depending on a camera model. If a parametric camera model, like unified model (C. Mei and P. Rives, "Single View Point Omnidirectional Camera Calibration from Planar Grids", IEEE ICRA, Roma, Italy, April, 2007) is used, triangulation in Perspective space is preferred. Otherwise, if for instance polynomial distortion models (Scaramuzza, D., Martinelli, A. and Siegwart, R., (2006). "A Flexible Technique for Accurate Omnidirectional Camera Calibration and Structure from Motion", Proceedings of IEEE International Conference of Vision Systems (ICVS'06), New York, January 5-7, 2006) are applied, Euclidean space should be used since the inverse transformation from world to image is not parametric. More specifically, in case of a wide-angle camera such as a Fisheye camera, preferably triangulation in Euclidean space is used. Triangulation in Perspective space is used for a pinhole (standard) camera.

In accordance with a preferred embodiment, the triangulation is performed in Euclidean space. More preferably, the geometric quality metric in accordance with the first and second aspects of the invention is the sum of the squared distances between the reconstructed 3D world coordinates and each of the N rays from the respective camera viewpoint to the tracked image point and the optimal result is the minimum of said sum. In other words, a 3D point is selected as the final reconstructed 3D point, for which the sum of the squared distances between the reconstructed 3D world coordinates and each of the N rays is minimal.

In accordance with an alternative preferred embodiment, the triangulation is performed in Perspective space. More preferably, the geometric quality metric in accordance with the first and second aspects of the invention is a sum of reprojection errors that occur when the image is projected back to the N image domains of the first plurality of images, said step of determining the geometric quality measure includes reprojecting the reconstructed 3D world coordinates back to the image domains in order to obtain the reprojection errors, and the optimal result is the smallest sum of the reprojection errors. In other words, a 3D point is selected as the final reconstructed 3D point, for which the sum of the reprojection errors is minimal.

Still more preferably, the first plurality N is N>3 and the step of generating a second plurality of subsets includes the steps of dividing the first plurality N of tracked image points in a fourth plurality m of manners into intermediate subsets of tracked image points, such that each of the m division results is a set of subsets of tracked image points including subsets having a predetermined number $n_k$, k = 1, ... m of tracked image points corresponding to consecutive images, performing the triangulation for reconstructing the 3D world coordinates of the tracked image point for each of the intermediate subsets included in the m sets being the division results, reprojecting each of the reconstructed 3D world coordinates back to the image domains, for each of the N tracked image points, calculating a reprojection error for each of the reprojections, comparing the calculated reprojection errors with a predetermined threshold, counting a tracked image point having a reprojection error smaller than the threshold to be an inlier and marking a tracked image point having a reprojection error larger than the threshold and the respective intermediate subset to be an outlier, and selecting a set of subsets having the largest number of inliers among the m sets of intermediate subsets, but excluding the outliers, as the second plurality N' of subsets. Hence, in said embodiment the number n of tracked image points per subset (bundle) is determined so as to minimize an overall reprojection error. Further, out of all those bundles having the size n those are excluded that were determined as outliers.

Still more preferably, if there are plural sets of intermediate subsets having the same number of inliers, the one having the smaller sum of reprojection errors is selected.

In accordance with a preferred embodiment, the digital camera is a Fisheye camera.

For performing the step of tracking the image point through the first plurality of images, i.e. the images consecutively tracked by the camera while the vehicle is moving, any tracking method (method for estimating an optical flow) known in the art can be applied. Preferably, the image tracking is performed by means of a Kanade - Lucas or Kanade - Lucas - Tomasi (KLT) feature tracker. Details of such trackers are described, for instance, in B. D. Lucas and T. Kanade, "An iterative image registration technique with an application to stereo vision", Proceedings of Imaging Understanding Workshop, pages 121-130, (1981), Jianbo Shi and Carlo Tomasi, "Good Features to Track", IEEE Conference on Computer Vision and Pattern Recognition, pages 593-600, 1994, and Jae Kyu Suhr, "Kanade - Lucas - Tomasi (KLT) Feature Tracker, Computer Vision Lab., Yonsei Univ., Fall 2009 (http://web.yonsei.ac.kr/jksuhr/articles/Kanade-Lucas-Tomasi%20Tracker.pdf).

Preferably, not only a single point is tracked but plural image points (feature points) are selected to be tracked and the respective method steps according to the first aspect of the invention are performed for each of these feature points. A typical number of feature points is in the range of approximately 1000 to 2000.

More preferably, the selection of the feature points is performed by dividing the captured images into grid cells, tracking feature points of objects in the grid cells and deciding whether to keep a tracked feature point as a selected point to be tracked based on a confidence threshold indicating the confidence that the tracked feature points in consecutive frames match. The threshold is preferably set to be different for different sections (cells) of the grid. Thereby, it may be achieved that for regions of the scene having a sophisticated and complex structure such as edges, more feature points are selected than in a region of the scene having a smoother character such as a surface, but nevertheless a sufficient amount of feature points is also selected in smooth regions with little structure.

Further preferably, on the basis of tracking and reconstructing a plurality of feature points in 3D, a correction of the camera positions initially obtained from the vehicle odometry data can be performed. This is generally performed by rearranging the assumed camera positions so as to optimize (preferably: minimise) some geometric quality metric. Thereby, the vehicle movement information initially obtained from vehicle odometry is improved.

Specifically, this can be done by minimizing the overall sum of the reprojection errors between the tracked image points and the image points reprojected from the reconstructed 3D points into the initial N images.

Further, preferably the reconstructed 3D points are based on the corrected camera positions, and those reconstructed 3D points which after the correction do not meet a predetermined quality criterion (in particular: have a sum of reprojection errors that is larger than a threshold) are removed as unreliable.

In this manner, the overall result can be improved by iteratively correcting the camera positions and the reconstructed points. Usually, a few iterations such as up to three iterations are sufficient.

Also preferably, all steps according to a method according to the first aspect of the present invention and the preferred embodiments thereof are repeatedly performed in order to generate information about a change of the reconstructed 3D model with time, i.e. to obtain a space-time model. Specifically, after the method has been performed for the first N images (frames 1 to N), in the next step it is repeated with the following N images (frames 2 to N+1), and so on.

When a reconstructed 3D point is generated, it can be projected back, with the use of the odometry information, to the current image, i.e. the image corresponding to the current vehicle location/camera position, to predict its estimated position. This prediction will help to either improve the accuracy of the tracking or reduce the necessary runtime for finding correspondences.

Preferably, the vehicle according to the further particular aspect of the present invention is equipped with a plurality of digital cameras in order to generate a 3D reconstruction model of a portion of the space surrounding the vehicle having an angular size that cannot be captured by a single camera. For instance, contemporary vehicles (cars) are often equipped with four cameras (front, rear, and both sides). With four wide-angle cameras (Fisheye cameras) it is no problem to cover a full surrounding angle of 360°, i.e. to provide a circumferential view for generating a 3D reconstruction model of a circumferential view around the vehicle. In other applications, it may be sufficient, for instance, to use two cameras such as rear and front, or on both sides.

Further features and advantages of the present invention are the subject matter of dependent claims.

## BRIEF DESCRIPTION OF THE DRAWINGS

Additional features and advantages of the present invention will become apparent in the following and more particular description as illustrated in the accompanying drawings, wherein:

Fig. 1 is an overall flowchart showing the processing for reconstructing a 3D point in accordance with an embodiment of the present invention;

Fig. 2 is a diagram for illustrating a triangulation method in Euclidean space, in accordance with embodiments of the present invention; and

Fig. 3 illustrates experimental results of a 3D reconstruction of portions of the surroundings of a vehicle by means of two side cameras, under different environmental conditions (weather and daytime).

## DETAILED DESCRIPTION

The present invention provides a fast and robust 3D reconstruction with a single camera (for each predetermined angular portion of the space surrounding a vehicle) and further based on vehicle odometry data. The reconstruction according to the present invention is based on the framework of "Structure from Motion" (SfM). This is a technique to estimate three-dimensional structures from two-dimensional image sequences, preferably coupled with local motion signals. The general idea of SfM is to perform feature matching between continuous frames captured by a camera, in order to find a transformation of tracked points against the movement of the car (vehicle). The movement of the car is known from vehicle odometry data that are provided via a vehicle bus. Since the tracked points can be assumed to be static (a good approximation when the frame rate is sufficiently high) and the movement of the car is known, it is feasible to estimate the location of the points in the 3D car coordinates. An exemplary frame rate may be in the range from 10 to 30 frames per second (fps), for instance, 15 or 20 fps.

It is known that the computational effort for performing the 3D reconstruction considerably increases with the density of feature points. For instance, at present, it is not feasible to perform the necessary processing in quasi-real-time for a dense SfM based on four cameras with a PC, and so it is even less feasible for a vehicle embedded platform.

The present invention proposes a scheme wherein a smaller amount of feature points is sufficient to be tracked, in order to still sufficiently clearly detect important objects in a vehicle's environment such as obstacles or parking slots. The framework is therefore referred to as "Sparse Structure from Motion". Normally, for instance, a density of about 1000 to 2000 points in an image having the size of 1280x960 pixels may serve as an order for the density of feature points in accordance with embodiments of the present invention.

It is moreover known that the knowledge of the viewpoints of the cameras in the situation of employing a single camera that is under movement (based on the vehicle odometry data received from the vehicle bus) is less precise than in the situation of using multiple static cameras (or at least a stereo camera) as the basis for the triangulation. For this purpose, the triangulation is based on a plurality (N) of consecutive images, but for the actual reconstruction actually only plural subsets thereof having a predetermined size n < N are employed that are determined so as to minimise some cost function (geometric quality metric), i.e. fulfil some quality criterion.

Conventionally, the epipolar geometry is applied for feature tracking for 3D point estimation. This is not always reliable as it requires the assumption of traversing on a completely flat road. The estimation of intrinsic/extrinsic parameters is performed online and refined through a global bundle adjustment process. This makes the 3D reconstruction very complex or needing much throughput. The present invention provides a 3D reconstruction method which is able to cope with particular uncertainties from vehicle odometry, calibration errors, as well as random noise in point matching.

SfM starts from the simple idea of computer vision geometry: relative transformation between coordinates and perspective views. This means that if we know our movement, we can estimate the "static" structures around us in three dimensions (3D reconstruction). Also, when the relative moment of the rigid structures such as obstacles in the environment is known, it is possible to estimate our own movement (i.e. the viewpoints of the camera). The latter is known as "Visual Odometry".

The present invention preferably performs feature detection and tracking with the raw image data (such as of a fisheye image). Although it is possible in principle to initially process raw image data for obtaining an undistorted image by a rectilinear method, so that available techniques for a pinhole camera model can be applied, the present invention preferably refrains from such an approach. It has the drawback that the rectilinear process adds much interpolation error and is computationally expensive.

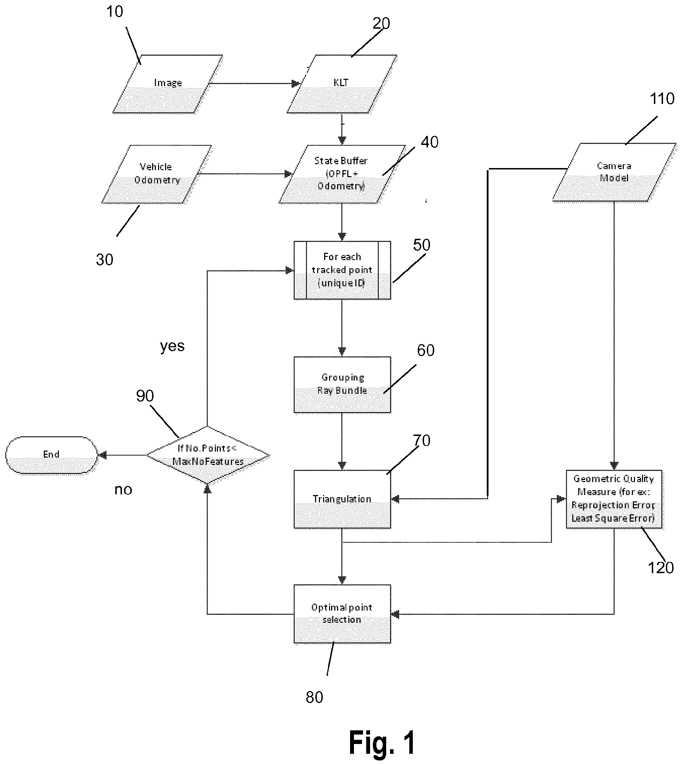

In the following, an overall processing flow of a method for performing 3D environment reconstruction in accordance with an embodiment of the present invention will be described with reference to Fig. 1.

A first prerequisite for each SfM based method such as according to the present invention, is the input of consecutive images 10 from the camera.

SfM theoretically does not need vehicle odometry (CAN/FlexRay) which can be estimated through computer vision geometry (homography) within SfM itself. However, it is much faster to use the CAN/FlexRay vehicle odometry data 30 as an initial input of data about the movement of the vehicle itself. Also, this enables the possibility of actively controlling the odometry estimation given by the passive sensor (camera). For this purpose, the present invention employs the estimated vehicle odometry data 30 delivered via the vehicle bus as a further input. For vehicle odometry, for instance, the Ackermann model may be used. As a result, data characterizing a movement of the vehicle over time (i.e. location of the vehicle and, in particular, the viewpoint of the camera mounted thereto at any instance of time) are obtained from the wheel speed and steering angle measured at any instance of time.

For structure interpretation, in particular, for tracking selected feature points, optical flow estimation is performed. Specifically, in accordance with the embodiment of Fig. 1, KLT feature tracking 20 is used for finding point correspondences between consecutive frames and then estimating the transformation between bundles of rays corresponding to the tracked points. In other words, the KLT feature tracker (more generally: an optical flow estimator) is used to track distinctive visual features from images obtained from a standard RGB camera. The idea is to first find invariant features in single images which can then be tracked along multiple frames.

More specifically, a grid-based sparse KLT optical flow is built to track feature points such as corners of objects (corner features). This means that the image is divided by a grid and different weights are given for thresholds on KLT scores in different sections (cells) of the grid to accept detected or tracked points. This means that the weights (thresholds) for deciding whether or not there is sufficient confidence to assume a match between one point and a point in the subsequent frame is said to be different for different sections of the grid so that each section of the grid has a certain number of feature points to be distributed randomly. For instance, in an area (grid section) of the scene, wherein there are complex structures such as grass, a bush or tree, or a building, i.e. an object having a large number of "corner" points that can be easily distinguished, the threshold is set to be high, in order to relatively reduce the number of feature points finally accepted. On the other hand, in a portion of the scene where there is only little structure, such as basically smooth surfaces (concrete road, wall, car, truck trunk etc.), the threshold is set to be low, in order to find sufficient suitable feature points to be tracked. This helps to distribute the tracked points gradually across the field of view in order to guarantee that the whole 3D structure of the scene is captured.

If, for example, the scene to be captured (image) is divided into m x n grid cells, it is the aim to detect and track features gradually over the scene (image). For that aim, for each grid cell, a maximum number of feature points to be detected is set to a predetermined value K. Thus, in a scene with a gradual texture distribution, (m x n x K) feature points are expected to be detected - this means (m x n x K) feature points which have the highest feature scores in accordance with a known score measure (for example Harris, FAST, Tomasi etc.) throughout the image. In a complex scene or image, the number of feature points within a grid cell, which contains the complex texture region, will be limited to K. If at a frame N, the number of feature points within a grid cell, which contains the less texture region, is k, and k<<K; in the next frame N+1, the thresholds for the feature scores within the grid cell can be reduced to increase the number of feature points within that grid cell. This is the so called Grid-based Adaptive Threshold for feature point detection. Therefore, when having the grid-based approach, different thresholds on the feature scores can be weighted for different grid cells in order to obtain a gradual point distribution throughout the scene (image).

It is further noted that in regions with only little structure, no one of the available score functions is capable of properly discriminating feature points and this introduces a high risk of finding wrong correspondences during the tracking. Therefore, a dense selection of feature points (as compared to a sparse one) does not even always improve accuracy.

The optical flow data and the vehicle odometry data are stored in a state buffer 40. More specifically, the state buffer stores tracked image points together with their corresponding odometry information (or tracked image points together with corresponding camera positions).

In the following, for each of the feature points in accordance with the embodiment the processing steps following box 50 are performed. This means the following processing steps 60, 70, 80 are performed for each of the feature points (approximately 1000 to 2000) selected from the optical flow and tracked through a first plurality of N frames (N > 2, N preferably being a number in the range from 3 to 10, for instance N = 5 or N = 6). In other words, each of the following steps is performed with reference to a single one of the feature points, but to all N tracked image points for said feature point (in N image frames captured by the camera from N different viewpoints during vehicle motion).

In a first step (60), subsets with different sizes are formed out of the N tracked image points. Then, the actual size of the subset to be used is determined (and outliers are removed).

The basic idea of this process is as follows: Assume that a world point X is tracked N times from an optical flow process, which is represented by N tracked image points xk, k = 1, ..., N, in N image planes. However, since the precision of the N camera viewpoints corresponding to the N image planes is lower than for zero motion capturing with multiple cameras and, in particular, there may be outliers in the N tracked image points, a subset (bundle) of n tracked image points is selected for triangulation, rather than the whole set of N tracked image points.

In principle, there may be $C_N^n = N!/[n!(N-n)!]$ possible subsets having a size of n. However, due to the nature of the optical flow process, the tracked image point at a frame t only depends on the previous detected point at frame t-1. So there is no relation to other frames from the history. Thus it makes sense to only consider bundles including tracked image points from continuous (consecutive) frames. This reduces the number of frames to be considered. For example, for n = 3, we have N-2 subsets (bundles) {x1, x2, x3}, {x2, x3, x4}, ..., {xN-2, xN-1, xN}.

Moreover, the selection of n depends on the noise level of the images and the optical flow process. As indicated above, using the whole history of N tracked points to reconstruct a 3D point gives an inaccurate result due to both odometry error and noise in KLT (point matching and tracking).

If the noise level is high, so n should be small enough so that there is at least a subset that is an inlier (containing n correct tracked image points). On the other hand, at low noise level, it may be meaningful to employ a higher n, in order to better compensate for the imprecision of the camera locations due to the vehicle odometry data.

In a preferred embodiment, the determination as to which number n (bundle size or size of the subsets) is used is as follows: It starts with the lowest possible bundle size n = 2. Then, the following three steps are repeated for the available bundles of any possible size n < N.

Step 1: For every bundle of n continuous tracked image points (in the following, for simplicity the tracked image points are also designated as "rays", see below), reconstructing a 3D point ("intermediate point") based on triangulation. Triangulation will be described in more detail in connection with the step of the following box (70) of the flowchart of Fig. 1.

Step 2: Reprojecting (120) the 3D points (i.e. a single intermediate point obtained for each bundle) back to the image domains of each of the N image planes, based on the camera model, to compute the reprojection errors for all tracked image points (N).

The reprojection error is a typical geometric quality metric in the field of computer vision. It is defined as a geometric error corresponding to the image distance between a reprojected point and a measured one (i.e. in the present case one of the tracked image points in the respective one of the N image domains). As a distance measure, preferably the squared distance between the points is used. The reprojection error quantifies how closely an estimate of a 3D point recreates the true projection of the point.

A tracked image point whose reprojection error (120) is smaller than a threshold is counted as an inlier. Otherwise, it is marked as an outlier, together with the bundle from which it was reprojected. Eventually the number of inliers and the sum of reprojection errors reveal the saliency of the selection, i.e. the more inliers having the selection of n (=2 or 3, etc.) there are, the better the selection is.

Step 3: The bundle size (n = 2 or n = 3 or n = 4 etc.) which creates the largest number of inliers is chosen. If there are two bundle sizes (n = 2 or n = 3 or n = 4 etc.) which produce the same number of inliers, the one which has the smaller sum of reprojection errors is chosen.

For instance, for N=5, possible values of n are 2, 3, 4 (corresponding to triangulation for every two consecutive rays or three consecutive rays or four consecutive rays). Performing the triangulation is then started for the bundles having n = 2, i.e. (x1, x2), (x2, x3), (x3, x4) and (x4, x5). Subsequently, the triangulation is performed for the bundles having n = 3 and n = 4. Then the number n used for determining the actual reconstructed 3D point is determined as indicated under Step 3 above.

Since the processing described above results in grouping of the N rays into bundles (subsets), the processing in box 60 is called "Grouping Ray Bundle".

As indicated above, and shown in the figure in box 120, the present invention is not restricted to taking the reprojection error as a measure for the quality of the selection of a bundle size n in step 2 above. For instance, the squared distances between the reconstructed intermediate 3D point and each of the N rays from the respective camera viewpoint to the tracked image point may be taken instead (i.e. least square error as a criterion). Also, for the outlier removal, the distribution of the 3D world coordinates reconstructed from the individual bundles can be used as a criterion.

In the following, details of an embodiment of performing the triangulation (box 70) are described.

Generally, a decision about a triangulation method to be applied is made on the basis of a camera model (see the arrow from the camera model 110 to the triangulation box 70). The camera model may further be taken into account for selecting a most suitable geometric quality metric (see the arrow from the camera model 110 to the geometric quality measure box 120).

For a fisheye camera (wide-angle camera), where the transformation between camera "plane" and world coordinates and vice versa is not linear (since the image coordinate is actually no longer a plane but a parabola), epipolar planar or trifocal (intersection of three planes) methods for getting the triangulation cannot be used. Therefore, the points in the image have to be converted into 3D rays and the rays have to be processed in Euclidean space.

On the other hand, for a pinhole (standard) camera triangulation in Perspective space is used since it is possible to process directly from the image where the projection matrix is known.

In the embodiment illustrated in Fig. 1, preferably triangulation in Euclidean space is used.

For each tracked image point, its corresponding ray whose origin is the camera centre in the world coordinate is computed using the camera model and the odometry data and stored. The triangulation can be easily done for each subset of n continuous rays using the least square method. Indeed, this turns to the problem of finding a 3D point whose sum of distances to a subset of "n" infinite lines formed by given rays is minimum.

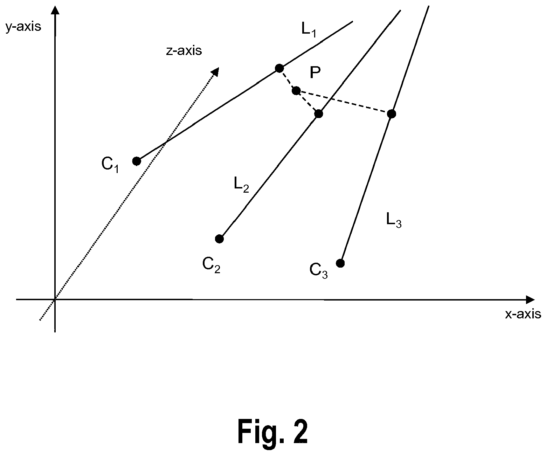

The following explains the processing with respect to the diagram of Fig. 2.

Each line has a parametic representation as:

$$L_i(t) = C_i + t\vec{r_i},$$ where t is a running parameter, i = 1, 2, or 3.

The distance from a point P to the line is:

$$d(P, L_i) = \frac{|\overrightarrow{PC_i} \times \vec{r_i}|}{\vec{r_i}}$$

The sum of squared distances that needs to be minimized is

$$d^2(P, \{L_i : i = (1, n)\}) = \sum_{i=1}^{n} \left( \frac{|\overrightarrow{PC_i} \times \vec{r_i}|}{\vec{r_i}} \right)^2$$

Setting the first derivative of $d^2$ on P to be zero, this leads to a common problem of Ax = b, where A and b are known and x are the unknown coordinates ({x,y,z}) of P. Thus,

$$x = (A^T A)^{-1} A^T b$$

if $A^T A$ is not an ill-conditioned matrix. Otherwise, SVD (Singular Value Decomposition) should be used.

In the following, an alternative embodiment of performing the triangulation in Perspective space will be briefly described.

Said method of calculation is performed, as indicated above, in case there is a parametric transformation between world and image coordinates. The relation between a world point X and its tracked image point $x_i$ can be expressed by

$$X^* = [X^T \ 1]^T$$

$$x_i = P_i X^*,$$

wherein Pi is the projection matrix. For a set of M tracked $x_i$, the X* can be obtained by a least square

$$X^{*T} = \sum_{i=0}^{M} P_i^T \hat{x}_i A^{-1},$$

wherein $A = \sum_{i=0}^{M} P_i^T P_i$ and $\hat{x}_i$ is the estimation result for $x_i$ from the tracking scheme.

After the size of the subsets (bundles) to be taken for obtaining the 3D reconstruction point has been determined (for instance, n = 2 for N = 5, or n = 3 for N = 6), all - already available from the previous processing - intermediate reconstructed points corresponding to bundles having the selected size, but excluding those that were previously determined as outliers, are considered. Out of these, the point which provides the minimum sum of reprojection errors 120 is selected in step 80 as the final reconstructed 3D point. Again, a measure for determining the final reconstructed point out of the intermediate points is not limited to the exemplary embodiment of considering the reprojection error (or more specifically, the sum of the reprojection errors with respect to each of the initial N image domains). Other possible measures are applicable, for instance, once more the sum of the squared distances to the rays from the respective camera viewpoint to the tracked image point.

After the final (optimal) reconstructed 3D point has been selected in step 80, the processing proceeds to step 90, wherein it is checked whether there are remaining feature points that have not yet been processed. If this is the case (90: yes) processing returns to step 50 and the following steps are repeated for the next feature point. If, on the other hand, all feature points are processed (90: no), the processing ends.

Further, in a preferred embodiment, a procedure for correcting the camera locations (viewpoints) that were initially assumed on the basis of the vehicle odometry data received via the vehicle bus, is performed once all feature points have been reconstructed in the 3D model ("mini-bundle adjustment").

Said processing is performed in two steps.

In a first step, it is assumed that all thus reconstructed feature points are correct, and the N camera positions are optimized. This is done by minimizing the overall sum of the reprojection errors between the tracked image points and the image points reprojected from the reconstructed 3D points into the N image domains, for all feature points and all N reprojections per feature point.

In a second step, the optimized positions of the camera from the first step are used, in order to re-correct the triangulated 3D points and then to check the reprojection error of the updated 3D points. Points which have a reprojection error that is larger than a threshold will be removed as a result of the second step.

Of course, suitable geometric quality metrics other than the reprojection error are again applicable.

The above two-step procedure can be performed iteratively. Since outliers, i.e. points considerably deviating from the rest of the points, are already removed within the main procedure of Fig. 1, a small number of three iterations maximum should normally be sufficient.

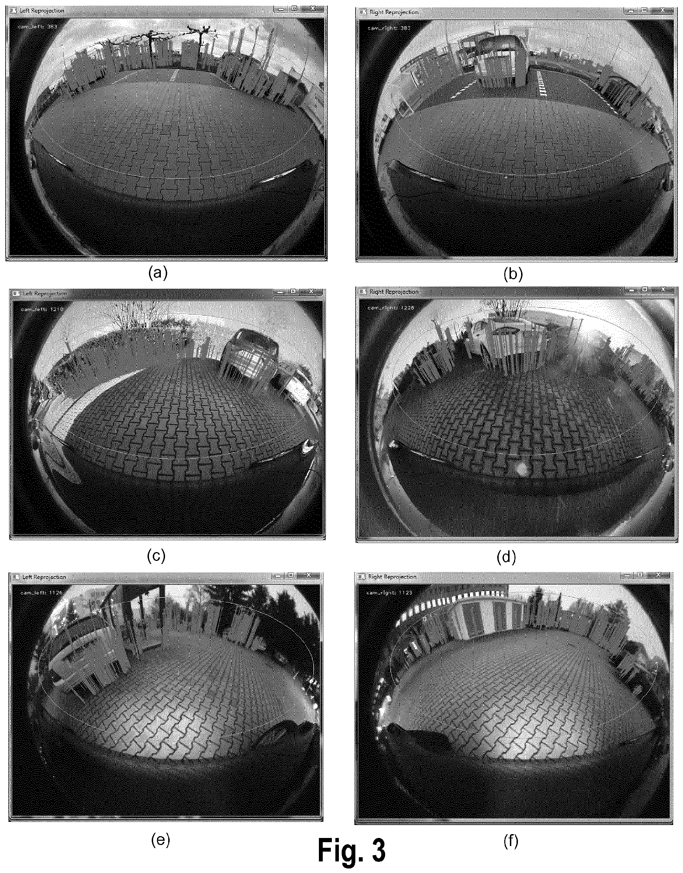

Fig. 3 provides an illustration of experimental results of reconstructions performed by a method according to the present invention.

3D reconstruction results (red bars) are overlaid on respective photos taken from two side cameras (left in Figs. 3(a), (c) and (e), right in Figs. 3(b), (d) and (f)). The vehicle trajectory is shown in the blue curve. Specifically, the first row (Figs. 3(a) and (b)) show an example for the 3D reconstruction under the condition of cloudy weather, the second row (Figs. 3(c) and (d)) show an example for the 3D reconstruction under the condition of strong sunshine, and the bottom row (Figs. 3(e) and (f)) shows an example for the 3D reconstruction in the evening.

In summary, the present invention relates to a method and system for reconstructing a portion of the environment of a moving vehicle based on an image sequence captured during vehicle movement at a predetermined frame rate and vehicle odometry data obtained from conventional automotive equipment, via a vehicle bus. The reconstruction is performed on the basis of a sparse Structure from Motion approach, wherein an optimal subset of tracked image points for triangulation is determined on the basis of optimizing a geometric quality metric.

**Claims**

1. A method of generating a 3D reconstruction model of a portion of the space surrounding a moving vehicle by means of a vehicle embedded computing system on the basis of image data (10) obtained by a digital camera mounted on the vehicle and capable of imaging a portion of the space surrounding the vehicle and on vehicle odometry data (30) indicating the movement of the vehicle, the method comprising the steps of:

capturing, by the camera, a first plurality N, N > 2, of images (10) of the portion of the space surrounding the vehicle, at a predetermined frame rate, while the vehicle is moving;
selecting (50) an image point to be tracked through the first plurality of images (10);
tracking (20, 40) the image point through the first plurality of images (10) so as to obtain a first plurality N of tracked image points;
generating (60) a second plurality N' of subsets of tracked image points, each of the subsets including a third plurality of a predetermined number n of tracked image points corresponding to a third plurality of consecutive images, wherein N' < N and n < N;
for each of the N' subsets, performing the steps of

reconstructing (70) the 3D world coordinates of the tracked image point based on triangulation on the basis of the vehicle odometry data (30), and
determining a geometric quality metric characterizing the quality of the reconstructed 3D world coordinates; and

selecting (80) the 3D world coordinates reconstructed by means of the subset which produces the optimal result based on the determined geometric quality metric as the final reconstructed 3D point.

2. A method according to claim 1, wherein said first plurality N is N > 3 and said step (60) of generating a second plurality of subsets including the steps of dividing the first plurality N of tracked image points in a fourth plurality m of manners into intermediate subsets of tracked image points, such that each of the m division results being a set of subsets of tracked image points including subsets having a predetermined number $n_k$, k = 1, ... m of tracked image points corresponding to consecutive images, performing the triangulation for reconstructing the 3D world coordinates of the tracked image point for each of the intermediate subsets included in the m sets being the division results, determining a geometric quality metric characterizing the quality of the reconstructed 3D world coordinates for each of the triangulation results and for each of the N tracked image points, comparing the determined geometric quality metrics with a predetermined threshold, counting a tracked image point having a geometric quality metric smaller than the threshold to be an inlier and marking a tracked image point having a geometric quality metric larger than the threshold and the respective intermediate subset to be an outlier, and selecting a set of subsets having the largest number of inliers among the m sets of intermediate subsets, but excluding the outliers, as the second plurality N' of subsets.

3. A method according to claim 1 or 2, wherein said step of reconstructing (70) the 3D world coordinates is performed by triangulation in Euclidean space,

the geometric quality metric determined and used in said selecting step (80) is the sum of the squared distances between the reconstructed 3D world coordinates and each of the N rays from the respective camera viewpoint to the tracked image point, and the optimal result is the minimum of said sum.

4. A method according to claim 1, wherein
said step of reconstructing (70) the 3D world coordinates is performed by triangulation in Perspective space,
said geometric quality metric is a sum of reprojection errors occurring when reprojecting the image back to the N image domains of the first plurality of images, said step of determining the geometric quality metric includes reprojecting the reconstructed 3D world coordinates back to the image domains in order to obtain the reprojection errors, and
the optimal result is the smallest sum of the reprojection errors.

5. A method according to claim 4, wherein said first plurality N is N > 3 and said step (60) of generating a second plurality of subsets including the steps of dividing the first plurality N of tracked image points in a fourth plurality m of manners into intermediate subsets of tracked image points, such that each of the m division results being a set of subsets of tracked image points including subsets having a predetermined number $n_k$, k = 1, ... m of tracked image points corresponding to consecutive images,
performing the triangulation for reconstructing the 3D world coordinates of the tracked image point for each of the intermediate subsets included in the m sets being the division results,
reprojecting each of the reconstructed 3D world coordinates back to the image domains, for each of the N tracked image points,
calculating a reprojection error for each of the reprojections,
comparing the calculated reprojection errors with a predetermined threshold,
counting a tracked image point having a reprojection error smaller than the threshold to be an inlier and marking a tracked image point having a reprojection error larger than the threshold and the respective intermediate subset to be an outlier, and
selecting a set of subsets having the largest number of inliers among the m sets of intermediate subsets, but excluding the outliers, as the second plurality N' of subsets.

6. A method according to claim 5, wherein a set of subsets having the smaller sum of reprojection errors is selected if there are plural sets of subsets having the same number of inliers.

7. A method according to any of claims 1 to 6, wherein said camera is a Fisheye camera.

8. A method according to any of claims 1 to 7, wherein said step of tracking (20, 40) the image point through the first plurality of images is performed by means of a Kanade-Lucas or Kanade-Lucas-Tomasi feature tracker (20) for estimating an optical flow.

9. A method according to any of claims 1 to 8, wherein said selecting step (50) selecting plural image points to be tracked,
and said steps of tracking (20, 40), of generating (60) a second plurality N' of subsets, of reconstructing (70) the 3D world coordinates and reprojecting (120) the 3D world coordinates and selecting (80) the final reconstructed 3D point are performed for each of the selected plural image points.

10. A method according to claim 9, wherein the selection (50) of the plural image points to be tracked is performed by dividing the captured images (10) into grids, tracking feature points of objects in the grids and deciding whether to keep a tracked feature point as a selected point to be tracked based on a confidence threshold indicating the confidence that the tracked feature points in consecutive frames match, wherein the threshold is set to be different for different sections of the grid.

11. A method according to claim 10 or 11, further comprising the steps of
correcting the N camera positions at which the first plurality N of images (10) was taken, as assumed based on the vehicle odometry data (30), on the basis of the reconstructed 3D points so as to minimize the overall sum of the reprojection errors between the tracked image points and the image points reprojected from the reconstructed 3D points into the N images, thereby improving the vehicle movement information initially obtained from vehicle odometry, correcting the reconstructed 3D points based on the corrected camera positions, and
removing reconstructed 3D points which after the correction have a sum of reprojection errors that is larger than a threshold, as unreliable.

12. A method according to any of claims 1 to 11, wherein all steps are repeatedly performed, starting with a first plurality of N images 1 to N, available when starting the processing, and being repeated with the respective most recent plurality of images 2 to N+1, 3 to N+2, ..., n to N+n-1, in order to generate a time variation of the generated 3D reconstruction model.

13. A system for generating a 3D reconstruction model of a portion of the space surrounding a moving vehicle, comprising:

a digital camera mounted on the vehicle and capable of imaging a portion of the space surrounding the vehicle, for capturing a first plurality N, N > 2, of images (10) of the portion of the space surrounding the vehicle, at a predetermined frame rate, while the vehicle is moving;

an odometry module for generating vehicle odometry data (30) indicating the movement of the vehicle; and

a vehicle embedded computing system, adapted to

select an image point to be tracked through the first plurality of images (10),

track the image point through the first plurality of images (10) so as to obtain a first plurality N of tracked image points, and

generate a second plurality N' of subsets of tracked image points, each of the subsets including a third plurality of a predetermined number n of tracked image points corresponding to a third plurality of consecutive images, wherein N' < N and n < N;

for each of the N' subsets, to reconstruct the 3D world coordinates of the tracked image point based on triangulation on the basis of the vehicle odometry data (30), and to determine a geometric quality metric characterizing the quality of the reconstructed 3D world coordinates; and

to select the 3D world coordinates reconstructed by means of the subset which produces the optimal result based on the determined geometric quality metric as the final reconstructed 3D point.

14. A vehicle comprising a system according to claim 13.

15. A vehicle according to claim 14, having a plurality of digital cameras in order to generate a 3D reconstruction model of an enhanced portion of the space surrounding the vehicle, or to generate a 3D reconstruction model of a circumferential view.

**Patentansprüche**

1. Verfahren zum Erzeugen eines 3D-Rekonstruktionsmodells eines Teils des ein sich bewegendes Fahrzeug umgebenden Raums durch ein im Fahrzeug eingebautes Computersystem auf der Basis von von einer auf dem Fahrzeug montierten und zur Bildgebung von einem Teil des das Fahrzeug umgebenden Raums fähigen Digitalkamera erhaltenen Bilddaten (10) und von Fahrzeugodometriedaten (30) zur Angabe der Bewegung des Fahrzeugs, wobei das Verfahren die Schritte umfasst zum:

Erfassen einer ersten Vielzahl N, N > 2, von Bildern (10) des Teils des das Fahrzeug umgebenden Raums durch die Kamera mit einer vorgegebenen Framerate, während sich das Fahrzeug bewegt;

Auswählen (50) eines durch die erste Vielzahl von Bildern (10) nachzuverfolgenden Bildpunkts;

Nachverfolgen (20, 40) des Bildpunkts durch die erste Vielzahl von Bildern (10), um eine erste Vielzahl N von nachverfolgten Bildpunkten zu erhalten;

Erzeugen (60) einer zweiten Vielzahl N' von Teilmengen von nachverfolgten Bildpunkten, wobei jede der Teilmengen eine dritte Vielzahl einer vorgegebenen Zahl n von nachverfolgten Bildpunkten entsprechend einer dritten Vielzahl von aufeinander folgenden Bildern umfasst, wobei N' < N und n < N;

für jede der N' Teilmengen Durchführen der Schritte zum

Rekonstruieren (70) der 3D-Weltkoordinaten des nachverfolgten Bildpunkts basierend auf einer Triangulation auf der Basis der Fahrzeugodometriedaten (30), und

Bestimmen einer geometrischen Qualitätsmetrik zum Charakterisieren der Qualität der rekonstruierten 3D-Weltkoordinaten; und

Auswählen (80) der rekonstruierten 3D-Weltkoordinaten durch die Teilmenge, die das optimale Ergebnis erzeugt, auf der Basis der bestimmten geometrischen Qualitätsmetrik als den endgültigen rekonstruierten 3D-Punkt.

2. Verfahren nach Anspruch 1, wobei die erste Vielzahl N N > 3 ist und der Schritt (60) zum Erzeugen einer zweiten Vielzahl von Teilmengen die Schritte umfasst zum Teilen der ersten Vielzahl N von nachverfolgten Bildpunkten in einer vierten Vielzahl m von Weisen in Zwischenteilmengen von nachverfolgten Bildpunkten, so dass jedes der m Teilungsergebnisse eine Menge von Teilmengen von nachverfolgten Bildpunkten umfassend Teilmengen mit einer vorgegebenen Zahl $n_k$, k = 1, ... m von nachverfolgten Bildpunkten entsprechend aufeinanderfolgenden Bildern ist,

Durchführen der Triangulation zum Rekonstruieren der 3D-Weltkoordinaten des nachverfolgten Bildpunkts für jede der in den m Mengen, welche die Teilungsergebnisse sind, enthaltenen Zwischenteilmengen,

Bestimmen einer geometrischen Qualitätsmetrik zum Charakterisieren der Qualität der rekonstruierten 3D-Weltkoordinaten für jedes der Triangulationsergebnisse und für jeden der N nachverfolgten Bildpunkte,

Vergleichen der bestimmten geometrischen Qualitätsmetriken mit einer vorgegebenen Schwelle,

Zählen eines nachverfolgten Bildpunkts mit einer geometrischen Qualitätsmetrik kleiner als die Schwelle als innerhalb befindliches Element und Kennzeichnen eines nachverfolgten Bildpunkts mit einer geometrischen Qualitätsmetrik größer als die Schwelle und die entsprechende Zwischenteilmenge als außerhalb befindliches Element, und

Auswählen einer Menge von Teilmengen mit der größten Zahl von innerhalb befindlichen Elementen von den m Mengen von Zwischenteilmengen, aber ohne die außerhalb befindlichen Elemente, als die zweite Vielzahl N' von Teilmengen.

3. Verfahren nach Anspruch 1 oder 2, wobei
der Schritt zum Rekonstruieren (70) der 3D-Weltkoordinaten durch Triangulation im euklidischen Raum durchgeführt wird,
die bestimmte und in dem Auswählschritt (80) verwendete geometrische Qualitätsmetrik die Summe der Abstände zwischen den rekonstruierten 3D-Weltkoordinaten und jeden der N Strahlen vom entsprechenden Kamerablickpunkt des nachverfolgten Bildpunkts im Quadrat ist, und
das optimale Ergebnisse das Minimum der Summe ist.

4. Verfahren nach Anspruch 1, wobei
der Schritt zum Rekonstruieren (70) der 3D-Weltkoordinaten durch Triangulation im Perspektivraum durchgeführt wird,
die geometrische Qualitätsmetrik eine Summe der beim Rückprojizieren des Bildes zurück zu den N Bildbereichen der ersten Vielzahl von Bildern auftretenden Rückprojektionsfehler ist,
der Schritt zum Bestimmen der geometrischen Qualitätsmetrik das Rückprojizieren der rekonstruierten 3D-Weltkoordinaten zurück zu den Bildbereichen zum Erhalten der Rückprojektionsfehler ist, und
das optimale Ergebnis die kleinste Summe der Rückprojektionsfehler ist.

5. Verfahren nach Anspruch 4, wobei die erste Vielzahl N N > 3 ist und der Schritt (60) zum Erzeugen einer zweiten Vielzahl von Teilmengen die Schritte umfasst zum Teilen der ersten Vielzahl N von nachverfolgten Bildpunkten in einer vierten Vielzahl m von Weisen in Zwischenteilmengen von nachverfolgten Bildpunkten, so dass jedes der m Teilungsergebnisse eine Menge von Teilmengen von nachverfolgten Bildpunkten umfassend Teilmengen mit einer vorgegebenen Zahl $n_k$, k = 1, ... m von nachverfolgten Bildpunkten entsprechend aufeinanderfolgenden Bildern ist,
Durchführen der Triangulation zum Rekonstruieren der 3D-Weltkoordinaten des nachverfolgten Bildpunkts für jede der in den m Mengen, welche die Teilungsergebnisse sind, enthaltenen Zwischenteilmengen,
Rückprojizieren von jeder der rekonstruierten 3D-Weltkoordinaten zurück zu den Bildbereichen für jeden der N nachverfolgten Bildpunkte,

Berechnen eines Rückprojektionsfehlers für jede der Rückprojektionen,
Vergleichen der berechneten Rückprojektionsfehler mit einer vorgegebenen Schwelle, Zählen eines nachverfolgten Bildpunkts mit einem Rückprojektionsfehler kleiner als die Schwelle als innerhalb befindliches Element und Kennzeichnen eines nachverfolgten Bildpunkts mit einem Rückprojektionsfehler größer als die Schwelle und die entsprechende Zwischenteilmenge als außerhalb befindliches Element, und
Auswählen einer Menge von Teilmengen mit der größten Zahl von innerhalb befindlichen Elementen von den m Mengen von Zwischenteilmengen, aber ohne die außerhalb befindlichen Elemente, als die zweite Vielzahl N' von Teilmengen.

6. Verfahren nach Anspruch 5, wobei eine Menge von Teilmengen mit der kleineren Summe von Rückprojektionsfehlern ausgewählt wird, wenn mehrere Mengen von Teilmengen die gleiche Zahl von innerhalb befindlichen Elementen aufweisen.

7. Verfahren nach einem der Ansprüche 1 bis 6, wobei die Kamera eine Fischaugenkamera ist.

8. Verfahren nach einem der Ansprüche 1 bis 7, wobei der Schritt zum Nachverfolgen (20, 40) des Bildpunkts durch die erste Vielzahl von Bildern durch einen Kanade-Lucas- oder Kanade-Lucas-Tomasi-Feature-Tracker (20) zum Schätzen eines optischen Flusses durchgeführt wird.

9. Verfahren nach einem der Ansprüche 1 bis 8, wobei der Auswählschritt (50) zum Auswählen von mehreren nachzuverfolgenden Bildpunkten,
und die Schritte zum Nachverfolgen (20, 40), zum Erzeugen (60) einer zweiten Vielzahl N' von Teilmengen, zum Rekonstruieren (70) der 3D-Weltkoordinaten und zum Rückprojizieren (120) der 3D-Weltkoordinaten und Auswählen (80) des endgültigen rekonstruierten 3D-Punkts für jeden der ausgewählten mehreren Bildpunkte durchgeführt werden.

10. Verfahren nach Anspruch 9, wobei die Auswahl (50) der mehreren nachzuverfolgenden Bildpunkte durch Teilen der erfassten Bilder (10) in Gitter, Nachverfolgen von Merkmalspunkten von Objekten in den Gittern und Entscheiden, ob ein nachverfolgter Merkmalspunkt als ein ausgewählter nachzuverfolgender Punkt auf der Basis einer Konfidenzschwelle zur Angabe der Konfidenz, dass die nachverfolgten Merkmalspunkte in aufeinander folgenden Frames übereinstimmen, behalten wird, wobei die Schwelle als verschieden für verschiedene Abschnitte des Gitters festgelegt wird, durchgeführt wird.

11. Verfahren nach Anspruch 10 oder 11, ferner umfassend die Schritte zum

Korrigieren der N Kamerapositionen, an denen die erste Vielzahl N von Bildern (10) aufgenommen wurde, als vorausgesetzt basierend auf den Fahrzeugodometriedaten (30), auf der Basis der rekonstruierten 3D-Punkte, um die Gesamtsumme der Rückprojektionsfehler zwischen den nachverfolgten Bildpunkten und den von den rekonstruierten 3D-Punkten in die N Bilder rückprojizierten zu minimieren, wodurch die ursprünglich von der Fahrzeugodometrie erhaltenen Fahrzeugbewegungsinformationen verbessert werden,

Korrigieren der rekonstruierten 3D-Punkte auf der Basis der korrigierten Kamerapositionen, und

Entfernen von rekonstruierten 3D-Punkten, die nach der Korrektur eine Summe von Rückprojektionsfehlern aufweisen, die größer ist als eine Schwelle, als unzuverlässig.

12. Verfahren nach einem der Ansprüche 1 bis 11, wobei alle Schritte wiederholt durchgeführt werden, beginnend mit einer ersten Vielzahl von N Bildern 1 bis N, verfügbar bei Beginn der Verarbeitung, und wiederholt mit der entsprechenden neuesten Vielzahl von Bildern 2 bis N+1, 3 bis N+2, n bis N+n-1, um eine Zeitvariation des erzeugten 3D-Rekonstruktionsmodells zu erzeugen.

13. System zum Erzeugen eines 3D-Rekonstruktionsmodells eines Teils des ein sich bewegendes Fahrzeug umgebenden Raums, umfassend:

eine auf dem Fahrzeug montierte und zur Bildgebung eines Teils des das Fahrzeug umgebenden Raums fähige Digitalkamera zum Erfassen einer ersten Vielzahl N, N > 2, von Bildern (10) des Teils des das Fahrzeug umgebenden Raums mit einer vorgegebenen Framerate, während sich das Fahrzeug bewegt;

ein Odometriemodul zum Erzeugen von Fahrzeugodometriedaten (30) zur Angabe der Bewegung des Fahrzeugs; und

ein im Fahrzeug eingebettetes Computersystem, angepasst zum

Auswählen eines durch die erste Vielzahl von Bildern (10) nachzuverfolgenden Bildpunkts Nachverfolgen des Bildpunkts durch die erste Vielzahl von Bildern (10), um eine erste Vielzahl N von nachverfolgten Bildpunkten zu erhalten, und

Erzeugen einer zweiten Vielzahl N' von Teilmengen von nachverfolgten Bildpunkten, wobei jede der Teilmengen eine dritte Vielzahl einer vorgegebenen Zahl n von nachverfolgten Bildpunkten entsprechend einer dritten Vielzahl von aufeinanderfolgenden Bildern umfasst, wobei N' < N und n < N;

für jede der N' Teilmengen Rekonstruieren der 3D-Weltkoordinaten des nachverfolgten Bildpunkts basierend auf einer Triangulation auf der Basis der Fahrzeugodometriedaten (30), und Bestimmen einer geometrischen Qualitätsmetrik zum Charakterisieren der Qualität der rekonstruierten 3D-Weltkoordinaten; und

Auswählen der rekonstruierten 3D-Weltkoordinaten durch die Teilmenge, die das optimale Ergebnis erzeugt, auf der Basis der bestimmten geometrischen Qualitätsmetrik als den endgültigen rekonstruierten 3D-Punkt.

14. Fahrzeug umfassend ein System nach Anspruch 13.

15. Fahrzeug nach Anspruch 14 mit einer Vielzahl von Digitalkameras zum Erzeugen eines 3D-Rekonstruktionsmodells eines verbesserten Teils des das Fahrzeug umgebenden Raums oder zum Erzeugen eines 3D-Rekonstruktionsmodells einer Rundsicht.

**Revendications**

1. Procédé de génération d'un modèle de reconstruction 3D d'une partie de l'espace entourant un véhicule en mouvement au moyen d'un système informatique embarqué sur véhicule sur la base de données d'image (10) obtenues par un dispositif de prise de vue numérique montée sur le véhicule et capable d'imager une partie de l'espace entourant le véhicule et de données d'odométrie de véhicule (30) indiquant le mouvement du véhicule, le procédé comprenant les étapes consistant à :

capturer, par le dispositif de prise de vue, une première pluralité N, N > 2, d'images (10) de la partie de l'espace entourant le véhicule, à une cadence de trame prédéterminée, alors que le véhicule se déplace ;

sélectionner (50) un point d'image à suivre à travers la première pluralité d'images (10) ;

suivre (20, 40) le point d'image à travers la première pluralité d'images (10) de manière à obtenir une première pluralité N de points d'image suivis ;

générer (60) une deuxième pluralité N' de sous-ensembles de points d'image suivis, chacun des sous-ensembles comprenant une troisième pluralité d'un nombre prédéterminé n de points d'image suivis correspondant à une troisième pluralité d'images consécutives, où N' < N et n < N ;

pour chacun des N' sous-ensembles, effectuer les étapes consistant à

reconstruire (70) les coordonnées universelles 3D du point d'image suivi sur la base d'une triangulation sur la base des données d'odométrie de véhicule (30), et
déterminer une métrique de qualité géométrique caractérisant la qualité des coordonnées universelles 3D reconstruites ; et

sélectionner (80) les coordonnées universelles 3D reconstruites à l'aide du sous-ensemble qui produit le résultat optimal sur la base de la métrique de qualité géométrique déterminée en tant que point 3D reconstruit final.

2. Procédé selon la revendication 1, dans lequel ladite première pluralité N est N > 3 et ladite étape (60) de génération d'une deuxième pluralité de sous-ensembles comprenant les étapes consistant à
diviser la première pluralité N de points d'image suivis d'une quatrième pluralité m de comportements en des sous-ensembles intermédiaires de points d'image suivis, de telle sorte que chacun des m résultats de division soit un ensemble de sous-ensembles de points d'image suivis comprenant des sous-ensembles ayant un nombre prédéterminé $n_k$, k = 1, ... m de points d'image suivis correspondant à des images consécutives,
effectuer la triangulation pour reconstruire les coordonnées universelles 3D du point d'image suivi pour chacun des sous-ensembles intermédiaires inclus dans les m ensembles constituant les résultats de division,
déterminer une métrique de qualité géométrique caractérisant la qualité des coordonnées universelles 3D reconstruites pour chacun des résultats de triangulation et pour chacun des N points d'image suivis,
comparer les métriques de qualité géométrique déterminées à un seuil prédéterminé, compter un point d'image suivi ayant une métrique de qualité géométrique inférieure au seuil comme étant une enclave (inlier) et marquer un point d'image suivi ayant une métrique de qualité géométrique supérieure au seuil et le sous-ensemble intermédiaire respectif comme étant une butte (oulier), et
sélectionner un ensemble de sous-ensembles ayant le plus grand nombre d'enclaves parmi les m ensembles de sous-ensembles intermédiaires, mais en excluant les buttes, en tant que deuxième pluralité N' de sous-ensembles.

3. Procédé selon la revendication 1 ou 2, dans lequel ladite étape de reconstruction (70) des coordonnées universelles 3D est réalisée par triangulation dans un espace euclidien,
la métrique de qualité géométrique déterminée et utilisée lors de ladite étape de sélection (80) est la somme des distances au carré entre les coordonnées universelles 3D reconstruites et chacun des N rayons allant du point de vue respectif de dispositif de prise de vue au point d'image suivi, et
le résultat optimal est le minimum de ladite somme.

4. Procédé selon la revendication 1, dans lequel ladite étape de reconstruction (70) des coordonnées universelles 3D est effectuée par triangulation dans un espace en perspective,
ladite métrique de qualité géométrique est une somme d'erreurs de reprojection survenant lors de la reprojection de l'image vers les N domaines d'image de la première pluralité d'images,
ladite étape de détermination de la métrique de qualité géométrique comprend la reprojection des coordonnées universelles 3D reconstruites vers les domaines d'image afin d'obtenir les erreurs de reprojection, et
le résultat optimal est la plus petite somme des erreurs de reprojection.

5. Procédé selon la revendication 4, dans lequel ladite première pluralité N est N > 3 et ladite étape (60) de génération d'une deuxième pluralité de sous-ensembles comprenant les étapes consistant à
diviser la première pluralité N de points d'image suivis d'une quatrième pluralité m de comportements en des sous-ensembles intermédiaires de points d'image suivis, de telle sorte que chacun des m résultats de division soit un ensemble de sous-ensembles de points d'image suivis comprenant des sous-ensembles ayant un nombre prédéterminé $n_k$, k = 1, ... m de points d'image suivis correspondant à des images consécutives,
effectuer la triangulation pour reconstruire les coordonnées universelles 3D du point d'image suivi pour chacun des sous-ensembles intermédiaires inclus dans les m ensembles constituant les résultats de division,
effectuer une reprojection de chacune des coordonnées universelles 3D reconstruites sur les domaines d'image, pour chacun des N points d'image suivis, calculer une erreur de reprojection pour chacune des reprojections,
comparer les erreurs de reprojection à un seuil prédéterminé,
compter un point d'image suivi ayant une erreur de reprojection inférieure au seuil comme étant une enclave et marquer un point d'image suivi ayant une erreur de reprojection plus grande que le seuil et le sous-ensemble intermédiaire respectif comme étant une butte, et
sélectionner un ensemble de sous-ensembles ayant le plus grand nombre d'enclaves parmi les m ensembles de sous-ensembles intermédiaires, mais en excluant les buttes, en tant que deuxième pluralité N' de sous-ensembles.

6. Procédé selon la revendication 5, dans lequel un ensemble de sous-ensembles ayant la somme plus petite d'erreurs de reprojection est sélectionné s'il existe plusieurs ensembles de sous-ensembles ayant le même nombre d'enclaves.

7. Procédé selon l'une quelconque des revendications 1 à 6, dans lequel ledit dispositif de prise de vue est un dispositif de prise de vue Fisheye.

8. Procédé selon l'une quelconque des revendications 1 à 7, dans lequel ladite étape de suivi (20, 40) du point d'image à travers la première pluralité d'images est effectuée au moyen d'un dispositif de suivi de caractéristiques Kanade-Lucas ou Kanade-Lucas-Tomasi (20) pour estimer un flux optique.

9. Procédé selon l'une quelconque des revendications 1 à 8, dans lequel ladite étape de sélection (50) consistant à sélectionner plusieurs points d'image à suivre, et lesdites étapes de suivi (20, 40), de génération (60) d'une deuxième pluralité N' de sous-ensembles, de reconstruction (70) des coordonnées universelles 3D et de reprojection (120) des coordonnées universelles 3D et de sélection (80) du point 3D reconstruit final sont effectuées pour chacun des plusieurs points d'image sélectionnés.

10. Procédé selon la revendication 9, dans lequel la sélection (50) des plusieurs points d'image à suivre est effectuée en divisant les images capturées (10) en grilles, en suivant des points caractéristiques d'objets dans les grilles et en décidant de conserver ou non un point caractéristique suivi en tant que point sélectionné à suivre sur la base d'un seuil de confiance indiquant la confiance pour que les points caractéristiques suivis dans des trames consécutives correspondent, le seuil étant établi pour être différent pour différentes sections de la grille.

11. Procédé selon la revendication 10 ou 11, comprenant en outre les étapes consistant à corriger les N positions de dispositif de prise de vue auxquelles la première pluralité N d'images (10) a été prise, comme supposé sur la base des données d'odométrie de véhicule (30), sur la base des points 3D reconstruits afin de minimiser la somme globale des erreurs de reprojection entre les points d'image suivis et les points d'image reprojectés à partir des points 3D reconstruits dans les N images, améliorant ainsi les informations de mouvement de véhicule obtenues initialement à partir de l'odométrie de véhicule, corriger les points 3D reconstruits sur la base des positions de dispositif de prise de vue corrigées, et supprimer des points 3D reconstruits qui, après la correction, ont une somme d'erreurs de reprojection qui est supérieure à un seuil, comme non fiables.

12. Procédé selon l'une quelconque des revendications 1 à 11, dans lequel toutes les étapes sont effectuées de manière répétée, en commençant par une première pluralité de N images 1 à N, disponibles au démarrage du traitement, et étant répétées avec la pluralité d'images respective la plus récente 2 à N+1, 3 à N+2, ..., n à N+n-1, afin de générer une variation temporelle du modèle de reconstruction 3D généré.

13. Système pour générer un modèle de reconstruction 3D d'une partie de l'espace entourant un véhicule en mouvement, comprenant :

un dispositif de prise de vue numérique monté sur le véhicule et capable d'imager une partie de l'espace entourant le véhicule, pour capturer une première pluralité N, N > 2, d'images (10) de la partie de l'espace entourant le véhicule, à une cadence de trame prédéterminée, alors que le véhicule est en mouvement ;
un module d'odométrie pour générer des données d'odométrie de véhicule (30) indiquant le mouvement du véhicule ; et
un système informatique embarqué sur véhicule, adapté pour
sélectionner un point d'image à suivre à travers la première pluralité d'images (10), suivre le point d'image à travers la première pluralité d'images (10) de manière à obtenir une première pluralité N de points d'image suivis, et
générer une deuxième pluralité N' de sous-ensembles de points d'image suivis, chacun des sous-ensembles comprenant une troisième pluralité d'un nombre prédéterminé n de points d'image suivis correspondant à une troisième pluralité d'images consécutives, où N' < N et n < N ;
pour chacun des N' sous-ensembles, reconstruire les coordonnées universelles 3D du point d'image suivi sur la base d'une triangulation sur la base des données d'odométrie de véhicule (30), et déterminer une métrique de qualité géométrique caractérisant la qualité des coordonnées universelles 3D reconstruites ; et
sélectionner (80) les coordonnées universelles 3D reconstruites à l'aide du sous-ensemble qui produit le résultat optimal sur la base de la métrique de qualité géométrique déterminée en tant que point 3D reconstruit final.

14. Véhicule comprenant un système selon la revendication 13.

15. Véhicule selon la revendication 14, ayant une pluralité de dispositifs de prise de vue numériques afin de générer un modèle de reconstruction 3D d'une partie étendue de l'espace entourant le véhicule, ou de générer un modèle de reconstruction 3D d'une vue circonférentielle.

**Fig. 1**

**Fig. 2**

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.W. FITZGIBBON et al.** Automatic Camera Recovery for Closed or Open Image Sequences. *Proc. ECCV,* 1998, vol. 98, 311-326, http://citeseerx.ist.psu.edu/viewdoc/download
- **DAVID NISTÉR.** Reconstruction from Uncalibrated Sequences with a Hierarchy of Trifocal Tensors. *Network and Parallel Computing,* 2000, vol. 1842, 649-663
- **HEUNG-YEUNG SHUM et al.** Efficient Bundle Adjustment with Virtual Key Frames: A Hierarchical Approach to Multi-frame Structure from Motion. *Proceedings of the 1999 IEEE Computer Society Conference on Computer Vision and Pattern Recognition,* 1999, vol. 2, 538-543
- Accurate Camera Calibration for Off-line, Video-Based Augmented Reality. **SIMON GIBSON et al.** Proceedings of the International Symposium on Mixed and Augmented Reality ISMAR'02. IEEE Computer Society, 2002
- **C. MEI ; P. RIVES.** Single View Point Omnidirectional Camera Calibration from Planar Grids. IEEE ICRA, April 2007
- **SCARAMUZZA, D. ; MARTINELLI, A. ; SIEGWART, R.** A Flexible Technique for Accurate Omnidirectional Camera Calibration and Structure from Motion. *Proceedings of IEEE International Conference of Vision Systems (ICVS'06),* 05 January 2006
- **B. D. LUCAS ; T. KANADE.** An iterative image registration technique with an application to stereo vision. *Proceedings of Imaging Understanding Workshop,* 1981, 121-130
- **JIANBO SHI ; CARLO TOMASI.** Good Features to Track. *IEEE Conference on Computer Vision and Pattern Recognition,* 1994, 593-600
- **JAE KYU SUHR.** Kanade - Lucas - Tomasi (KLT) Feature Tracker. Computer Vision Lab., Yonsei Univ, 2009